# EUROPEAN PATENT SPECIFICATION

(11) **EP 0 533 140 B1**
(45) Date of publication and mention of the grant of the patent: **23.12.1998**
(21) Application number: 92115852.3
(22) Date of filing: 16.09.1992
(51) Int. Cl.: H04N 9/29

(54) **Degaussing circuit with delayed generation of a vertical deflection**
Entmagnetisierungsschaltung mit verzögerter Erzeugung der Vertikalablenkung
Circuit de démagnétisation avec production différée de la déflection verticale

(30) Priority: 20.09.1991 JP 270243/91
(43) Date of publication of application: 24.03.1993
(73) Proprietor: SONY CORPORATION, Tokyo 141 (JP)
(72) Inventor: Ogura, Toshiyuki, Shinagawa-ku, Tokyo (JP); Tsumori, Koki, Shinagawa-ku, Tokyo (JP)
(74) Representative: Körber, Wolfhart, Dr.rer.nat.

(56) References cited:
- EP-A- 0 219 287
- EP-A- 0 335 245
- EP-A- 0 424 982
- GB-A- 1 499 663
- US-A- 4 295 078
- IBM Technical disclosure Bulletin;Vol.29,No.6,Novembre 1986; page 2485; "CRT DEGAUSS FOR WIDE RANGE INPUT VOLTAGE SUPPLY".

## Description

### FIELD OF INVENTION

The present invention relates to cathode ray tube (CRT) displays and more specifically, to the degaussing circuit, within such displays, which is designed to neutralize the earth's magnetic effect.

### BACKGROUND OF THE INVENTION

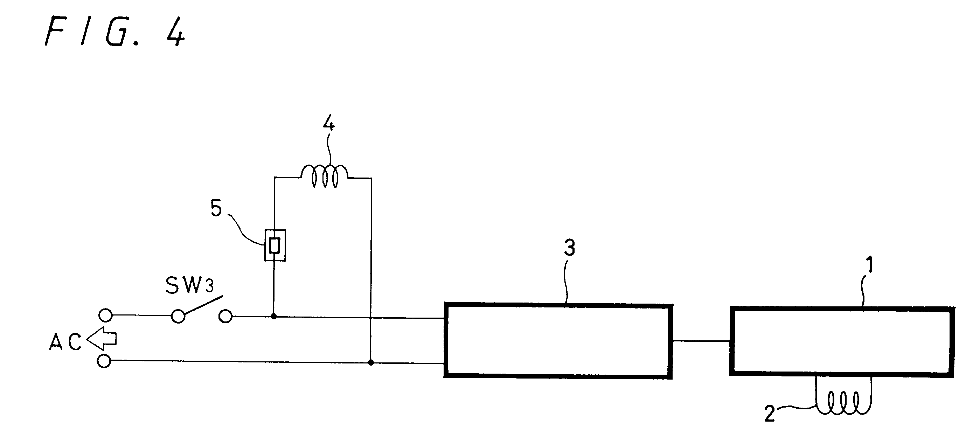

Degaussing circuits are presently used within standard CRT displays to neutralize picture distortion caused by magnetic flux. FIGURE 4 shows such a conventional CRT apparatus whose function is to project an image on a phosphor screen. This figure includes a vertical deflection circuit 1, a vertical deflection yoke 2 which is driven by a vertical deflection circuit 1, a power circuit 3 for the CRT apparatus, a degaussing coil 4, a thermal resistance element (posistor) 5 connected in series with the degaussing coil 4, a power switch SW3 and an AC power supply AC. The power circuit 3 is powered by the AC power supply AC and supplies drive power directly or indirectly to the vertical deflection circuit 1. The degaussing coil 4 and the thermal resistance element 5 are connected through the power switch SW3 to the AC power supply AC. The resistance of thermal resistance element 5 increases as its temperature increases.

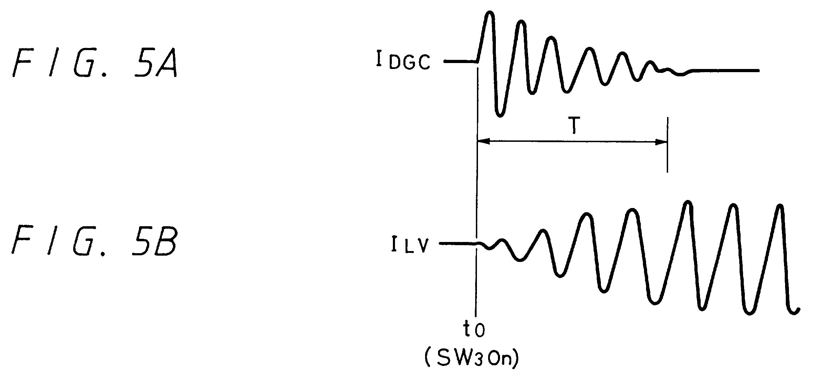

FIGURE 5 further describes the operation of this conventional apparatus. When the power switch, SW3 is turned on at time T₍₀₎, a current I_{(DGC)}, as shown in 5(a), flows into the degaussing coil 4 and the thermal resistance element 5, thereby degaussing the CRT. As the temperature of thermal resistance element 5 increases, its resistance value also increases and thereby gradually decreases the amplitude of the current I_{(DGC)}. When the circuit reaches its steady state, no current flows within it. Conversely, as shown in 5(b), the current I_{LV} flowing into vertical deflection yoke 2 is gradually increased after the power supply is activated and eventually reaches a constant amplitude in its steady state.

The effect of the degaussing coil as described is undesirable due to interference from the field of the vertical deflection yoke. Typically, efforts to reduce this interference include 1) providing a time constant for the rising edge of the drive signal to the vertical deflection circuit and 2) providing a time constant for the rising edge of the voltage to the vertical deflection circuit. These implementations have not achieved satisfactory results because they do not utilize a time constant sufficient in length to produce the desired results.

From EP-A2-0 424 982 a cathode ray tube apparatus according to the preamble of claim 1 is known. However, the second switch for supplying power to the vertical deflection yoke is activated in dependance on the switching on operation of a main switch and is connected between the power supply circuit for the vertical deflection yoke and the vertical deflection yoke.

Accordingly, it is an object of the invention to provide a CRT apparatus capable of satisfactorily degaussing the CRT when the power supply is activated, while avoiding interference with the operation of the vertical deflection yoke.

### SUMMARY OF THE INVENTION

This and other objects are attained according to the invention by providing a cathode ray tube apparatus according to claim 1. According to the present invention, when the power supply is turned on, current flows into the degaussing coil by the first switch means so that the CRT is degaussed by the field from the degaussing coil. A predetermined time afterwards, the vertical deflection yoke is supplied with current by the second switch. Accordingly, mutual interference between the degaussing coil and the vertical deflection yoke is prevented and a satisfactory degauss is achieved

### BRIEF DESCRIPTION OF THE DRAWINGS

The invention may be better understood from the following detailed description, taken in conjunction with the accompanying drawings, in which:
FIG. 1 is a block diagram of the construction of one embodiment of the invention.
FIG. 2 is a diagram showing the waveform of current at each portion in FIG. 1;
FIG. 3 is a diagram of another example of a cathode ray tube apparatus;
FIG. 4 is a diagram of a conventional CRT according to the prior art;
FIG. 5 is a diagram of the waveform of the current at each portion of FIG. 4.

### DETAILED DESCRIPTION OF THE INVENTION

While this invention is susceptible of embodiment in many different forms, there is shown in the drawings and will herein be described in detail one specific embodiment, with the understanding that the present disclosure is to be considered as an example of the principles of the invention and is not intended to limit the invention to the embodiment illustrated.

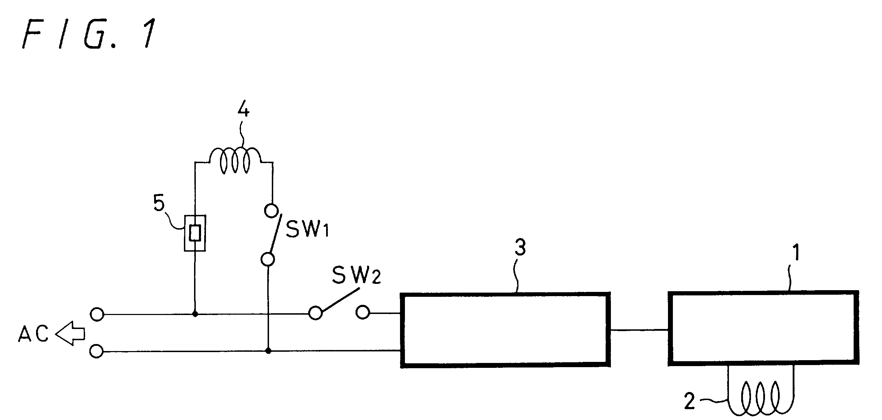

In the embodiment shown in FIG. 1, SW1 represents a switch connected in series between the AC power supply AC and a series circuit of the degaussing coil 4 and the thermal resistance element 5. SW2 is a switch connected in series with the power supply line between the AC power supply AC and the power circuit 3. The other portions are constructed in the same way as the conventional CRT apparatus depicted in FIG. 4.

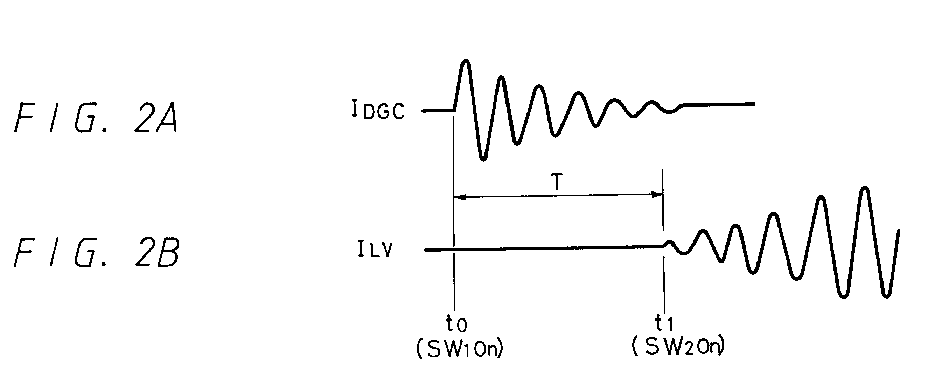

The operation of the invention is illustrated by FIG. 2. When the power supply is turned on and the switch SW1 is turned on at time t_{[0]}, the current I_{[DGC]} as shown in FIG. 2(a) flows in the degaussing coil 4 and the thermal resistance element 5 by the AC power supply AC. Then, the amplitude of the current I_{[DGC]} gradually decreases as described above, and finally approaches zero in the steady state. After a time interval T, measured as the elapsed time from t_{[0]}, the time at which switch SW1 was turned on, a sufficiently large degaussing effect on the CRT is achieved and the switch SW2 is turned on. Thus, the vertical deflection circuit 1 is then powered by the power circuit 3, so that the current I_{[LV]} starts flowing in the vertical deflection yoke 2 and gradually increases as shown in Fig. 2(b). Therefore, the vertical deflection magnetic field generated by the current I_{[LV]} from the vertical deflection yoke 2 does not interfere with the degaussing field generated by the current I_{[DGC]} from the degaussing coil 4. As a result, a sufficiently large degaussing effect is achieved by the current I_{[DGC]} in the degaussing coil 4, and thus the effect of the earth magnetism is neutralized.

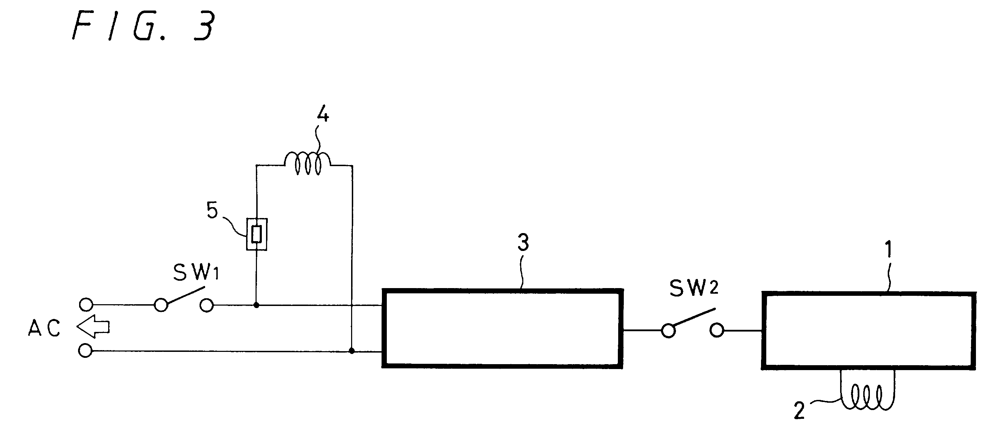

Fig. 3 shows another example of a cathode ray tube apparatus. In this example, the switch SW2 is connected in series with the power supply line between the power circuit 3 and the vertical deflection circuit 1. The other portions are constructed in the same way as in Fig. 1. In this circuit arrangement, the switches SW1 and SW2 are also activated in accordance with the timing shown in Fig. 2. Either arrangement is suitable for use in, for example, a large flat television set in which a large current flows in the degaussing coil.

## Claims

1. A cathode ray tube apparatus, comprising:
an AC power supply;
a degaussing circuit connected to said AC power supply, said degaussing circuit comprising:
a degaussing coil (4) for degaussing a cathode ray tube,
a thermal resistance element (5) connected in series with said degaussing coil (4), and
first switch means (SW1) connected in series with said degaussing coil (4) and said thermal resistance element (5), wherein the resistance of said thermal resistance element (5) gradually increases after said first switch means (SW1) have been switchend on, thereby decreasing the amplitude of the current flowing through said degaussing coil (4) so that in its steady state substantially no current flows;
a vertical deflection yoke (2) being connected to said AC power supply via a power supply circuit (3) for supplying current to said vertical deflection yoke (2); and
second switch means (SW2) for delaying the supply of current to said vertical deflection yoke (2) after the time at which said first switch means (SW1) have been switched on, wherein said delay time (T) is long enough for achieving a sufficient large degaussing effect by said degaussing coil (4),
**characterized in that**
said second switch means (SW2) are switched on in dependence on the switching on operation of said first switch means (SW1) upon the lapse of said delay time (T) after said first switching means (SW1) have been switched on, and
said second switch means (SW2) are connected in series between said AC power supply and said power supply circuit (3) for said vertical deflection yoke (2).

2. A cathode ray tube apparatus according to claim 1,
characterized in that
said first switch means (SW1), after having been switched on, remain switched on.

## Patentansprüche

1. Kathodenstrahlröhren Vorrichtung mit:
einem Netzanschluß;
einer Entmagnetisierungsschaltung, die mit dem Netzanschluß verbunden ist, wobei die Entmagnetisierungsschaltung umfaßt:
eine Entmagnetisierungsspule (4), um eine Kathodenstrahlröhre zu entmagnetisieren, ein Wärmewiderstandelement (5), das mit der Entmagnetisierungsspule (4) in Serie geschaltet ist, und
eine erste Schalteinrichtung (SW1), die mit der Entmagnetisierungsspule (4) und dem Wärmewiderstandselement (5) in Serie geschaltet ist, wobei der Widerstand des Wärmewiderstandelements (5) allmählich ansteigt, nachdem die erste Schalteinrichtung (SW1) eingeschaltet wurde, damit die Amplitude des Stroms, der durch die Entmagnetisierungsspule (4) fließt, verringert wird, so daß in ihrem eingeschwungenen Zustand im wesentlichen kein Strom fließt;
einer Vertikalablenkspule (2), die durch eine Stromversorgungschaltung (3) mit dem Netzanschluß verbunden ist, um Strom zu der Vertikalablenkspule (2) zu liefern; und
einer zweiten Schalteinrichtung (SW2), um die Stromversorgung zu der Vertikalablenkspule (2) zu verzögern, nach der Zeit, zu der die erste Schalteinrichtung (SW1) eingeschaltet wurde, wobei die Verzögerungszeit (T) lang genug ist, um eine genügend große Entmagnetisierung zu erreichen, die durch die Entmagnetisierungsspule (4) bewirkt wird,
**dadurch gekennzeichnet**,
daß die zweite Schalteinrichtung (SW2) eingeschaltet wird in Abhängigkeit von der Einschalthandlung der ersten Schalteinrichtung (SW1) beim Ablauf der Verzögerungszeit (T) nachdem die erste Schalteinrichtung (SW1) eingeschaltet wurde, und
daß die zweite Schalteinrichtung (SW2) zwischen dem Netzanschluß und der Stromversorgungschaltung (3) für die Vertikalablenkspule (2) in Serie geschaltet ist.

2. Kathodenstrahlröhren Vorrichtung gemäß Anspruch 1,
**dadurch gekennzeichnet**,
daß die erste Schalteinrichtung (SW1) eingeschaltet bleibt, nachdem sie eingeschaltet wurde.

## Revendications

1. Appareil de tube à rayons cathodiques comprenant :
une alimentation en courant alternatif ;
un circuit de dégaussage connecté à ladite alimentation en courant alternatif, ledit circuit de dégaussage comprenant :
une bobine de dégaussage (4) pour dégausser un tube à rayons cathodiques ;
un élément de résistance thermique (5) connecté en série avec ladite bobine de dégaussage (4) ; et
un premier moyen de commutateur (SW1) connecté en sérié avec ladite bobine de dégaussage (4) et avec ledit élément de résistance thermique (5), où la valeur de résistance dudit élément de résistance thermique (5) augmente progressivement après que ledit premier moyen de commutateur (SW1) a été commuté dans l'état activé, ce qui diminue l'amplitude du courant qui circule au travers de ladite bobine de dégaussage (4) de telle sorte que dans son état. de régime établi, sensiblement aucun courant ne circule ;
une culasse de déviation verticale (2) qui est connectée à ladite alimentation en courant alternatif via un circuit d'alimentation (3) pour appliquer un courant sur ladite culasse de déviation verticale (2); et
un second moyen de commutateur (SW2) pour retarder l'application du courant sur ladite culasse de déviation verticale (2) après l'instant'auquel ledit premier moyen de commutateur (SW1) a été commuté dans l'état activé, où ledit temps de retard (T) est suffisamment long pour obtenir un effet de dégaussage suffisamment important au moyen de ladite bobine dedégaussage (4),
caractérisé en ce que :
ledit second moyen de commutateur (SW2) est commuté dans l'état activé en fonction de l'opération de commutation dans l'état activé dudit premier moyen de commutateur (SW1) suite à l'écoulement dudit temps de retard (T) après que ledit premier moyen de commutateur (SW1) a été commuté dans l'état activé ; et
ledit second moyen de commutateur (SW2) est connecté en série entre ladite alimentation en courant alternatif et ledit circuit d'alimentation (3) pour ladite culasse de, déviation verticale (2).

2. Appareil de tube à rayons cathodiques selon la revendication 1, caractérisé en ce que ledit premier moyen de commutateur (SW1), après qu'il est commuté dans l'état activé, reste commuté dans l'état activé.
